# EUROPEAN PATENT APPLICATION

(11) **EP 1 608 182 A2**
(43) Date of publication of application: **21.12.2005**
(21) Application number: 05253734.7
(22) Date of filing: 16.06.2005
(51) Int. Cl.: H04N 7/66, H04N 7/64, H03M 13/15, G11B 20/00

(54) **Method and apparatus for processing transmission errors in DMB Systems**

(30) Priority: 19.06.2004 KR 2004045855
(71) Applicant: SAMSUNG ELECTRONICS CO., LTD., Suwon-si, Gyeonggi-do (KR)
(72) Inventor: Ryu, Ga-hyun, 912-905 Byuckjeokgol 9-danji Apt., Gyeonggi-do (KR); Jeon, Jong-gu, 107-501 Dongsuwon LG Village Apt., Suwon-si Gyeonggi-do (KR); Park, Jeong-hoon, Seoul (KR)
(74) Representative: Robinson, Ian Michael

(57) **Abstract**

Provided are a method and apparatus for detecting and processing transmission errors of various types of data which are transmitted in MPEG-2 transport streams. The transmission error processing method includes: detecting an error for an individual PES (packetized elementary stream) after detecting transmission error information from a received MPEG-2 transport stream (TS) including the transmission error information and demultiplexing the MPEG-2 TS into a plurality of PESes; recording data of the PES in a memory and adding a flag indicating that an error occurs to an end part of the data of the PES, and afterwards recording the data of the PES; and generating an interrupt according to the error detection.

## Description

The present invention relates to detection and processing of a transmission error in a digital multimedia broadcasting system, and more particularly, to a method and apparatus for detecting and processing transmission errors in various types of data transmitted in MPEG-2 transport streams.

A digital multimedia broadcasting (DMB) receiver is a next generation digital broadcasting receiver that is capable of receiving various additional data services, such as a traffic or stock information service, as well as an audio service providing high quality sound like a CD (compact disk), and also high quality clear video during high-speed movement. A DMB system encodes various types of data, such as video, audio, additional data, and so on, in an MPEG-4 data format, converts the encoded various data into MPEG-2 transport stream format, and then transmits the converted data, in order to transfer high-quality video data and audio data according to MPEG-2 and MPEG-4 standards.

Meanwhile, a Korean DMB system is based on a Eureka-147 standard, and according to this standard, audio data is encoded using BSAC (bit sliced arithmetic coding) and video data is encoded using an H.264 standard. In the DMB system, there is no problem when the power of a received signal is sufficiently strong. However, difficulty in receiving a DMB signal occurs in a tunnel or an area where the power of the received signal is weak. Hence, to overcome the problems, a Reed-Solomon (RS) (204, 188) outer-coding technique is applied to the Eureka-147 so that transmission errors caused by weakness can be prevented.

In a general DMB receiver, when errors are generated from a transmission channel part, error information is transferred to a media processing unit. The media processing unit outputs data by decoding the encoded audio, video, and additional data. That is, the error information detected in outer-decoding and demultiplexing the received DMB data, which includes the existence of the error, information on a location where the error occurs, and so on, is transferred to the media processing unit via an interrupt and a register. Then, the media processing unit receives the error information using the interrupt and the register, and executes an error processing routine by using an interrupt service routine (ISR).

In the DMB system, media data is transmitted in the MPEG-2 transport stream format, and the MPEG-2 transport stream includes a plurality of packetized element streams (PESes). The PES includes an audio PES, a video PES, an object descriptor (OD) PES, and a BIFS (binary format for scene) PES. The respective PESes are decoded using an audio decoder, a video decoder, an OD decoder, and a BIFS decoder, and then output to be displayed to a user.

However, even when the errors occurring during transmission are detected by decoding each type of PES packet, since the PES packets including the errors are decoded the receiver malfunctions due to a heavy load imposed on the receiver or non-execution of normal procedures.

Additionally, in transmitting MPEG-4 data in MPEG-2 data format, problems may occur during data transmission between a part for detecting the errors in hardware and an error processing program for receiving and processing the detected errors.

According to the present invention there is provided an apparatus and method as set forth in the appended claims. Preferred features of the invention will be apparent from the dependent claims, and the description which follows.

The present invention provides an apparatus for and a method of detecting errors of various types of data of a PES and efficiently processing the detected errors in an MPEG-2 transport stream demultiplexer.

The present invention also provides an apparatus for and a method of processing errors generated when receiving a DMB (digital multimedia broadcasting) signal by generating an error flag for every type of data and storing the error flag together with a PES packet in a memory for storing the PES packet when the error occurs in received data due to unstable reception of DMB.

According to an aspect of the present invention, there is provided a transmission error processing method including: detecting an error for an individual PES (packetized elementary stream) after detecting transmission error information from a received MPEG-2 transport stream (TS) including the transmission error information and demultiplexing the MPEG-2 TS into a plurality of PESes; recording data of the PES in a memory and adding a flag indicating that an error occurs to an end part of the data of the PES, and afterwards recording the data of the PES; and generating an interrupt according to the error detection.

The error information included in the MPEG-2 TS may be interpreted by an outer-decoding method.

The detected error may be transferred to an interrupt service routine through a predetermined register.

According to another aspect of the present invention, there is provided a transmission error processing method including: transferring a write address that is a location where an MPEG-2 demultiplexer records data in a memory and the number of the recorded data to a CPU through an interrupt; and performing an interrupt service routine that processes the interrupt according to the received write address and the number of the data.

In the performing of the interrupt service routine, the write address transferred by the demultiplexer may be compared with an address calculated by counting the number of the received interrupt, and when the write address and the calculated address are different, it may be determined that an error occurs, thereby the received data not being processed and being discarded.

According to still another aspect of the present invention, there is provided a transmission error processing apparatus comprising: an outer-decoder extracting error information after receiving an MPEG-2 TS including transmission error information; a TS demultiplexer demultiplexing the MPEG-2 TS into a plurality of PESes, and generating an error signal for each PES, and informing an occurrence of an error through an interrupt; and an interrupt processing unit recording the data of the PES in a memory, and adding a flag indicating that an error occurs to the end part of the data of the PES, and recording the data.

The above and other features and advantages of the present invention will become more apparent by describing in detail exemplary embodiments thereof with reference to the attached drawings in which:
Figure 1 is a schematic diagram showing the configuration of a DMB (digital multimedia broadcasting) system;
Figure 2 is a diagram showing a process of generating of an MPEG-2 transport stream in a DMB system;
Figure 3 is a block diagram of a DMB receiver for detecting and processing an error according to an exemplary embodiment of the present invention;
Figure 4 is a timing diagram of the transmission of an MPEG-2 TS (transport stream) packet;
Figure 5 is a diagram showing a process of generating an error flag;
Figure 6 is a flowchart for explaining an error processing method which is executed in a demultiplexer according to an embodiment of the present invention;
Figure 7 is a flowchart for explaining a method of detecting and processing a transmission error according to another exemplary embodiment of the present invention; and
Figure 8 is a flowchart for explaining a method of processing data using an address and a counter according to still another exemplary embodiment of the present invention.

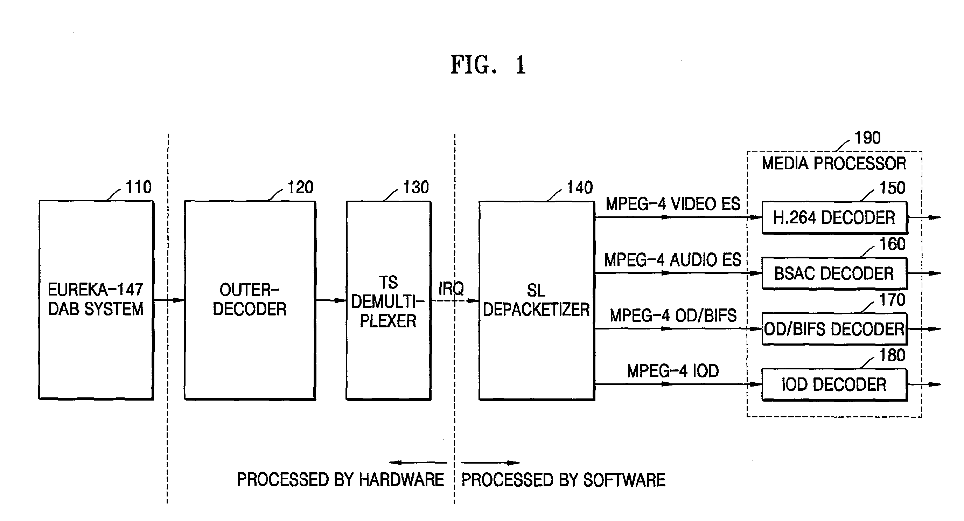

Figure 1 is a schematic diagram showing the configuration of a DMB (digital multimedia broadcasting) system.

A stream received from a Eureka-147 system 110 is an MPEG-2 TS (transport stream) on which outer-coding is performed. The MPEG-2 TS includes PES (packetized elementary stream) packets generated by packetizing MPEG-4 data which are converted from audio data, video data and additional data, respectively. Reed-Solomon (RS) decoding is performed on a received MPEG-2 transport stream by an outer-decoder 120. A TS demultiplexer 130 demultiplexes the MPEG-2 transport stream output after RS decoding, to generate audio PES, video PES, and additional PES. An SL (sync layer) depacketizer 140 removes SL headers from the PESes to produce MPEG-4 video ES (elementary stream), MPEG-4 audio ES, and MPEG-4 additional ES. An example of the MPEG-4 additional data is an MPEG-4 OD/BIFS (object descriptor/binary format for scene), and an MPEG-4 IOD (initial object descriptor). Each data is decoded by a media processor 190, and then output.

Meanwhile, according to an exemplary embodiment of the present invention, the media processor 190 includes an H.264 decoder 150, a BSAC (bit sliced arithmetic coding) decoder 160, an OD/BIFS decoder 170, and an IOD decoder 180. Further, error information sent from the outer-decoder 120 passes through the TS demultiplexer 130 and is transferred to the SL depacketizer 140 via a hardware interrupt IRQ, and then processed using software.

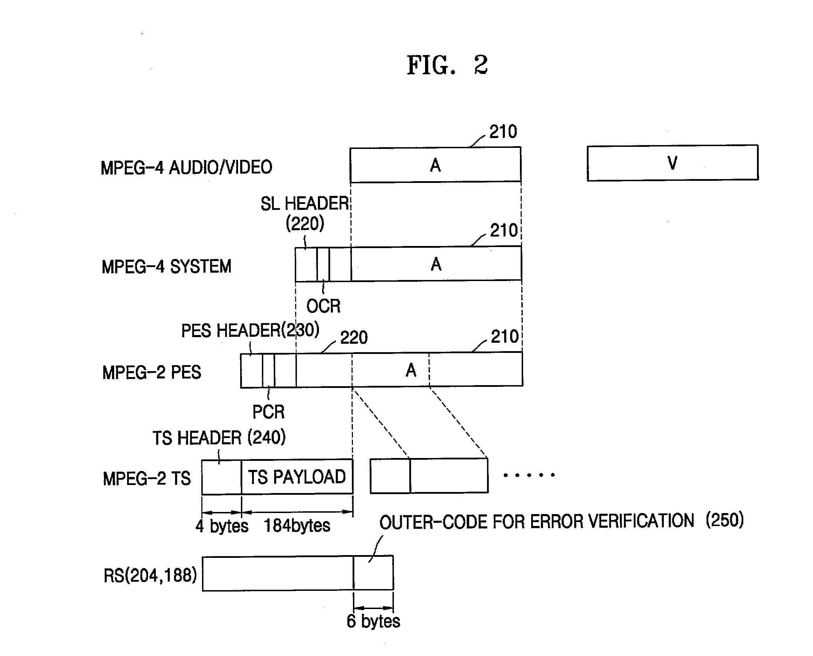

Figure 2 is a diagram showing a process of generating of an MPEG-2 transport stream in a DMB system.

Audio data, video data, and additional data are firstly encoded according to an MPEG-4 format. Although the audio data is described below as an example, the video data and the additional data are generated as MPEG-2 transport streams in the same manner. An SL header 220 is added to the audio data 210 converted into MPEG-4 data to produce MPEG-4 system data. The SL header 220 includes object clock reference (OCR) information. Next, a PES header 230 is added to the produced MPEG-4 system data to generate an MPEG-2 PES. The PES header 230 includes program clock reference (PCR) information. Then, the MPEG-2 PES is divided by a length of 184 bytes to produce a TS payload, and a TS header 240 with a length of 4 bytes is added to the TS payload to generate an MPEG-2 TS packet with a length of 188 bytes. An outer-encoder adds an outer-code 250 for error verification to the MPEG-2 TS packet, and then the MPEG-2 TS packet is transmitted to a DMB receiver (not shown).

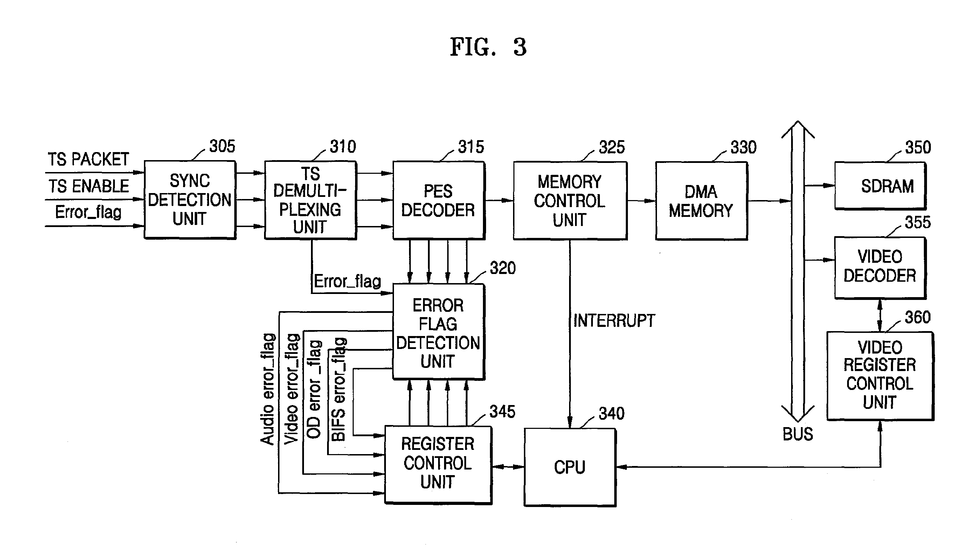

Figure 3 is a block diagram of a DMB receiver for detecting and processing an error according to an exemplary embodiment of the present invention.

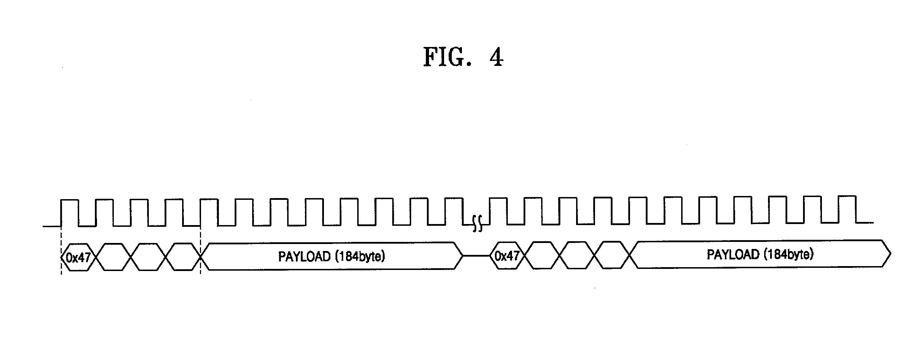

A sync detection unit 305 detects a sync signal of an MPEG-2 TS. The detection of the sync signal is described referring to Figure 4.

Figure 4 is a timing diagram of the transmission of an MPEG-2 TS packet.

Referring to Figure 4, the MPEG-2 TS packet is composed of a 4-byte header and a 184-byte payload. The payload may include an audio PES, a video PES, an OD/BIFS PES. The start of a header is a value of 0x47, which is a hexadecimal value, and thereby when 0x47 of the value is read, the sync detection unit 305 can recognize the start of the MPEG-2 TS packet.

A TS demultiplexing unit 310 demultiplexes the received MPEG-2 TS. In the MPEG-2 TS packet, program specific information (PSI), which is composed of a program allocation table (PAT) and a program map table (PMT), is inserted periodically. As it is possible to detect a program ID (PID) by interpreting the PSI, an audio PES packet, a video PES packet, and an additional data PES packet are generated according to the PID.

A PES decoder 315 decodes an audio PES, a video PES, and an additional data PES to generate MPEG-4 audio, MPEG-4 video, and MPEG-4 additional data.

An error flag detection unit 320 receives an error_flag from the TS demultiplexing unit 310, and generates again an error flag of a PES packet of data in which the error occurs. That is, the error flag is generated for each data.

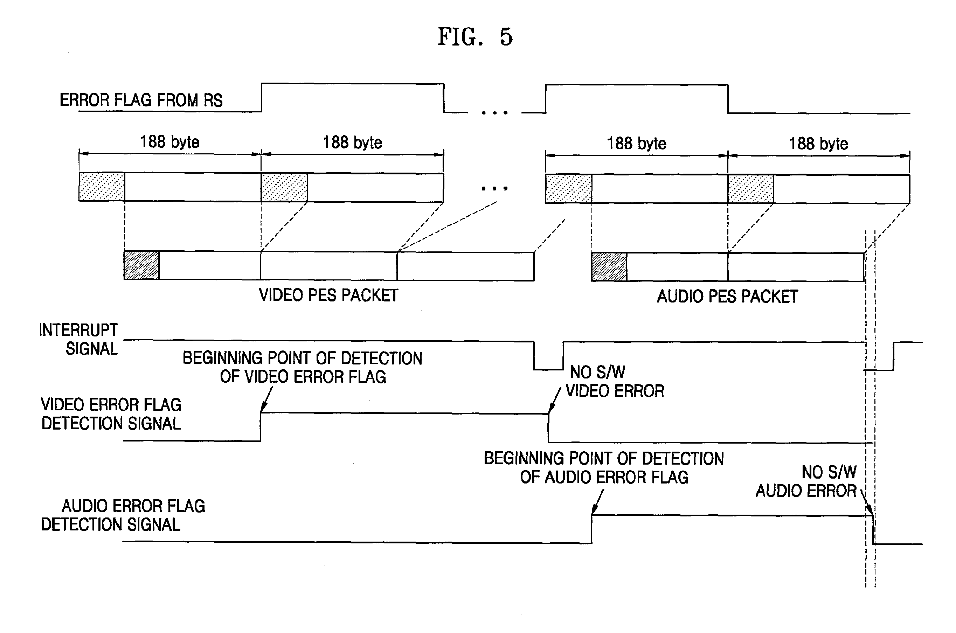

Figure 5 is a diagram showing a process of generating an error flag.

When an error occurs in data, an error flag signal of the corresponding data becomes a logic "high", and the "high" value of the error flag is stored in a register. Thereafter, a CPU 340 reads the register to detect the occurrence of the error, and drops the error flag to a logic "low" to perform an error processing routine in an interrupt service routine (ISR).

A memory control unit 325 controls a DMA (direct memory access) memory 330 in order to store the demultiplexed PES packet in a main memory. That is, a payload of each PES packet is stored in the main memory (not shown), and an interrupt is generated after storing one PES packet. When the generated interrupt is transferred to the CPU 340, the CPU 340 detects which data has an error causing the received interrupt using a register control unit 345, and records the data in queue included in the CPU 340. Thereafter, the CPU 340 performs the interrupt service routine (ISR).

Further, the memory control unit 325 records the error flag and generates the interrupt after storing the last PES packet in the main memory. This is for the CPU 340 to accurately detect the error flag by recording the data in the memory and simultaneously sending the error flag using the register.

Besides, an SDRAM 350 is a memory for storing the PES packet and a corresponding error signal, a video decoder 355 decodes the video PES packet, and a video register control unit 360 controls a video register (not shown) used in the video decoder 355.

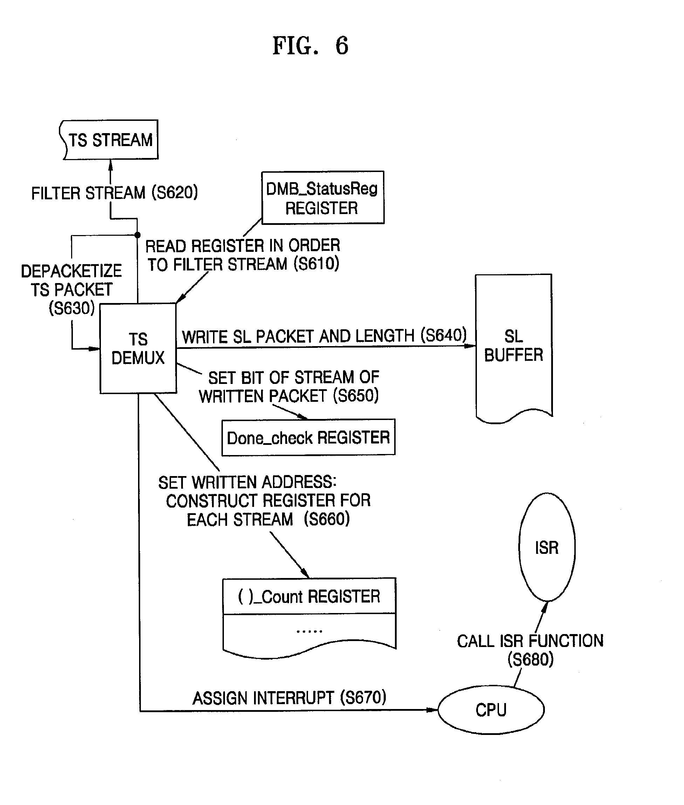

Figure 6 is a flowchart for explaining an error processing method which is executed in a demultiplexer according to an embodiment of the present invention.

The TS demultiplexer 130 reads a value of DMB_StatusReg that is a register indicating which stream is to be filtered among the received MPEG-2 transport streams (S610) . According to the read value, the TS stream is filtered, and then a desired stream is input (S620) . Then, the input TS stream is demultiplexed to generate an SL packet (S630), and the generated SL packet and length information of the packet is written to an SL buffer (S640). A Done_check register for the packet written to the SL buffer is set to "1" (S650), and address information of the written packet is also written to the register (S660). Then, an interrupt is generated to the CPU (S670), and the CPU performs the ISR by calling the ISR (S680).

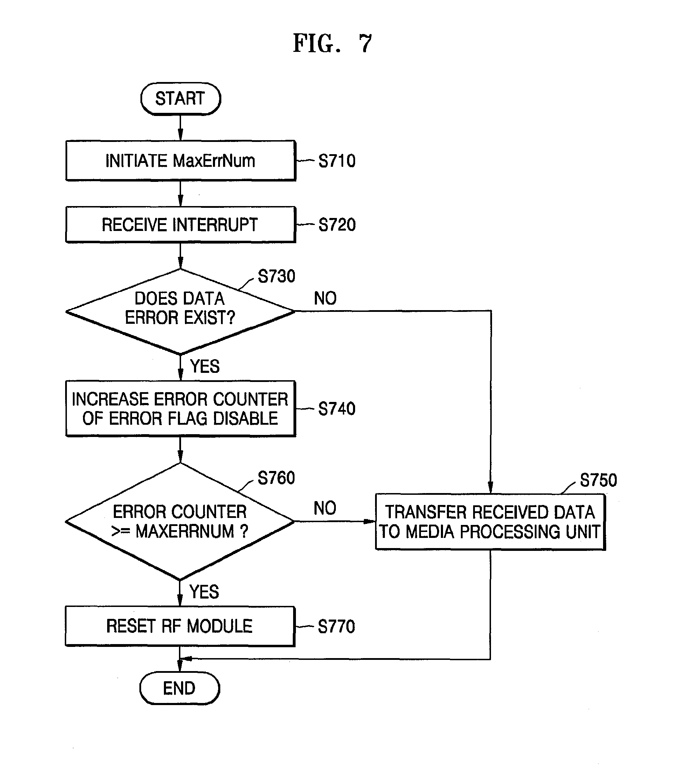

Figure 7 is a flowchart for explaining a method of detecting and processing a transmission error according to another exemplary embodiment of the present invention.

First, the maximum allowed value of the error (MaxErrNum) is determined. That is, the MaxErrNum that is a constant indicating the maximum number of the received errors for which no action is to be taken is determined (S710). Subsequently, an interrupt is received (S720). Then, as a processing operation in the ISR, it is determined whether an error exists in the received data by detecting the register in which an individual error flag existing for each data is registered (S730) . Here, the register is an arbitrary register recording the existence of an error. When it is determined that an error exists, the error flag is disabled and an error counter is increased by one (S740) . Then, it is determined whether the error counter is larger than or equal to the value of MaxErrNum set previously (S760). When the error counter is larger than or equal to the value, the DMB receiver is initialized by resetting an RF module (not shown) (S770).

That is, if more number of errors occurs than the previously fixed MaxErrNum, it is assured that the errors burst during transmission of data or synchronization information is lost during the transmission of data. The reset of the RF module is performed through an I2C bus. Although in the present embodiment, the RF module is reset in response to the occurrence of the error (S770), the present invention is not limited to the reset of the RF module, and various methods, such as reset of the DMB receiver or reset of a data receiving unit, can be used in response to the occurrence of the error.

When an error does not exist in the received data, the received data is transferred to the media processing unit (S750), and decoded therein to be output. In addition, when the error counter is smaller than the MaxErrNum, which is still in an error allowance range, the received data is transferred to the media processing unit (S750).

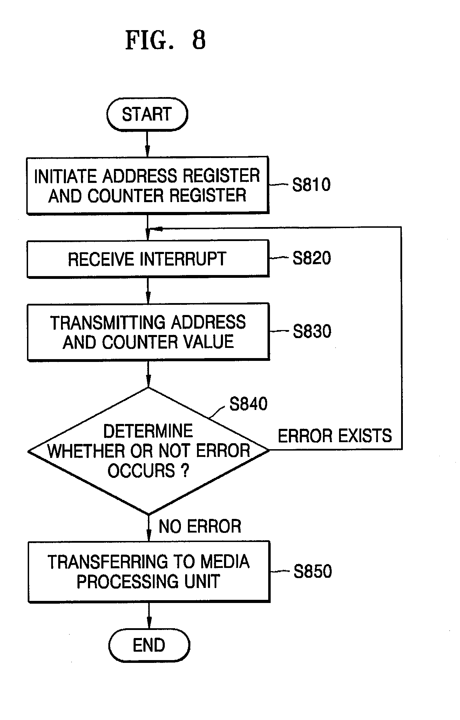

Figure 8 is a flowchart for explaining a method of processing data using an address and a counter according to still another exemplary embodiment of the present invention.

First, the address register and the counter register are initialized (S810). The address register stores a start address where data is stored in the memory by types of data, such as, audio, video, and additional data. A size of the counter register is decided according to each data. In other words, the write address of the SDRAM that is presently being written and the number of data written are stored in the register, thereby allowing the received data to be processed without errors even when the data cannot be handled immediately due to a message queue delay or for other various reasons.

Next, an interrupt is received from the TS demultiplexer 130 (S820). The interrupt is received and in the ISR, the write address of the memory and the counter are sent via the message queue (S830) . Thereafter, it is determined whether or not an error occurs (S840). Specifically, after the write start address of the memory is obtained using the current counter value sent from the TS demultiplexer 130, the start address is compared with the address received from the TS demultiplexer 130. When the start address and the received address are different from each other, as it is determined that the error occurs, no operation is performed and the interrupt service routine is terminated. Alternatively, when the start address and the received address are the same so that an error is determined not to exist, the write start address written by TS demultiplexer 130 is obtained using the counter. SL depacketizing is performed on the obtained start address via the message queue, and the depacketized start address is transferred to a media decoder to be output (S850).

Therefore, even if the point of time when the TS demultiplexer writes the data in the memory is different from the time when the data is read from the ISR, the number of data written to the SDRAM and a location where the data is lastly written are delivered through the register of the TS demultiplexer so that the transmission error of data does not occur. Since each register for audio, video, and addition data exists in the ISR, there occurs no transmission error of data between the TS demultiplexer and the ISR.

The transmission error processing method described above can be written as a computer program and implemented in a computer that executes the program using a computer readable recording medium. The computer readable recording medium includes magnetic storage media, optical recording media, and storage media such as carrier waves. Also, codes and code segments for accomplishing the present invention can be easily construed by programmers skilled in the art to which the present invention pertains.

As described above, since an individual error flag for each audio, video, and additional data is generated, the error can be immediately processed corresponding to each data stream. Even when an error occurs in one of the data streams, the influence on the other data stream having no errors can be minimized.

Additionally, since hardware and software exchange the error flags using the register and record the error flags in the memory, the generated error is appropriately addressed for each PES of data types, so that malfunction of the receiver can be prevented.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A transmission error processing method comprising:
detecting an error for an individual PES (packetized elementary stream) after detecting transmission error information from a received MPEG-2 transport stream (TS) including the transmission error information and demultiplexing the MPEG-2 TS into a plurality of PESes;
recording data of the individual PES in a memory and adding a flag indicating that an error occurs to the data of the individual PES, and afterwards recording the data of the individual PES; and
generating an interrupt according to the error detection.

2. The method of claim 1 further comprising:
initiating a maximum allowed value of an error;
receiving the interrupt;
determining whether or not the error exists in the received data;
disabling an error flag and increasing an error counter by one when the error exists, and comparing a value of the error counter with the maximum allowed value of the error; and
initiating a data receiving unit when the error counter is larger than or equal to the maximum allowed value of the error.

3. The method of claim 1 or 2, wherein the error information included in the MPEG-2 TS is interpreted by an outer-decoding method.

4. The method of claim 1, 2 or 3, wherein the detected error is transferred to an interrupt service routine through a predetermined register.

5. The method of claim 1, 2, 3 or 4, wherein the data of the individual PES is recorded in the memory through direct memory access (DMA).

6. A transmission error processing method comprising:
transferring a write address that is a location where an MPEG-2 demultiplexer records data in a memory and the number of the recorded data to a processor through an interrupt; and
performing an interrupt service routine that processes the interrupt according to the received write address and the number of the recorded data.

7. The method of claim 6, wherein in the performing of the interrupt service routine, the write address transferred by the demultiplexer is compared with an address calculated by counting the number of the recorded data, and when the write address and the calculated address are different, it is determined that an error occurs, so that the received data are not processed and are discarded.

8. The method of claim 6 or 7, wherein in the transferring of a write address, the write address and the number of the recorded data are transferred to the CPU using a predetermined register.

9. A transmission error processing apparatus comprising:
an outer-decoder (120) extracting error information after receiving an MPEG-2 TS including transmission error information;
a TS demultiplexer (310) demultiplexing the MPEG-2 TS into a plurality of PESes, and generating an error signal for each individual PES, and informing an occurrence of an error through an interrupt; and
an interrupt processing unit recording the data of the individual PES in a memory (330), and adding a flag indicating that an error occurs to the end part of the data of the individual PES, and recording the data.

10. The apparatus of claim 9, wherein the detected error is transferred to an interrupt service routine through a predetermined register.

11. The apparatus of claim 9 or 10, wherein the data of the individual PES is recorded in the memory through DMA.

12. A computer readable recording medium having embodied thereon a computer program for a method of any of claims 1 to 8.
